Europäisches Patentamt

European Patent Office

Office européen des brevets

(11) Veröffentlichungsnummer: **0 084 624
B1**

# EUROPÄISCHE PATENTSCHRIFT

(45) Veröffentlichungstag der Patentschrift:
09.03.88

(51) Int. Cl.⁴: **G 01 B 5/00**, G 01 B 3/00

(21) Anmeldenummer: **82110948.5**

(22) Anmeldetag: **26.11.82**

(54) **Längenmesseinrichtung.**

(30) Priorität: **22.01.82 DE 3201887**

(43) Veröffentlichungstag der Anmeldung:
**03.08.83 Patentblatt 83/31**

(45) Bekanntmachung des Hinweises auf die Patenterteilung:
**09.03.88 Patentblatt 88/10**

(84) Benannte Vertragsstaaten:
**AT CH FR GB IT LI NL SE**

(56) Entgegenhaltungen:
**DE - B - 2 810 341
DE - C - 536 762
FR - A - 2 344 810
US - A - 3 464 283
US - A - 3 774 310
US - A - 4 152 837**

(73) Patentinhaber: **Dr. Johannes Heidenhain GmbH,
Nansenstrasse 17, D-8225 Traunreut (DE)**

(72) Erfinder: **Nelle, Günther, Dr.-Ing., Eichenweg 12,
D-8221 Bergen (DE)**

### Beschreibung

Die Erfindung betrifft eine Längenmesseinrichtung zur Messung der Relativlage zweier Objekte gemäss dem Oberbegriff des Anpruchs 1, wie sie in der nachfolgend aufgeführten DE-C-25 10 219 beschrieben ist.

Bei einer derartigen Längenmesseinrichtung mit einer Abtasteinheit, die an einer von der Führung des zu messenden Objekts unabhängigen Hilfsführung verschiebbar ist, ist eine gelenkige Ankopplung der Abtasteinheit an das zu messende Objekt bzw. an den daran angebrachten Mitnehmer erforderlich.

Bei der Abtastung der Massstabteilung kann diese Ankopplung zu Messfehlern führen, wenn die Hilfsführung nicht parallel zur Führung des zu messenden Objekts verläuft und/oder Richtungsänderungen zwischen der Hilfsführung und der Mittellinie der Teilung des Massstabs auftreten.

Messfehler infolge Richtungsänderungen zwischen der Hilfsführung und der Mittellinie der Teilung (Richtungsfehler) werden durch eine Ankopplung der Abtasteinheit am Objekt bzw. am Mitnehmer in der neutralen Faser des Massstabs vernachlässigbar klein; die neutrale Faser ist als Schnittgerade zwischen der neutralen Ebene und der senkrecht zur neutralen Ebene in Messrichtung verlaufenden Ebene durch die Mittellinie der Teilung definiert.

Messfehler infolge von Unparallelitäten zwischen der Hilfsführung und der Führung des zu messenden Objekts werden nur dann vernachlässigbar klein, wenn das Kupplungselement so ausgebildet ist, dass es Relativbewegungen zwischen der Abtasteinheit und dem Mitnehmer bzw. dem Objekt senkrecht zur Messrichtung ohne eigene Längenänderung erlaubt.

Aus der DE-C-536 762 ist eine Führung eines durch Spindel und Mutter verstellbaren Tragschlittens für ein oder mehrere Messgeräte bekannt, bei der eine mit Spiel zwischen der Mutter und dem Tragschlitten eingesetzte Buchse die Mutter gegen Drehung durch prismatische Körper sichert, die paarweise in zwei zueinander senkrechten Ebenen und mit Spiel senkrecht zur Spindelachse angeordnet sind, so dass die Mutter bezüglich des linear starr geführten Tragschlittens zwei translatorische Freiheitsgrade senkrecht zur Spindelachse besitzt.

Der US-A-3 464 283 entnimmt man ebenfalls eine Linearführung für einen starr geführten Tragschlitten, der mittels einer Spindel und einer Mutter längsverschieblich ist. Die Mutter besitzt bezüglich des Tragschlittens zwei translatorische Freiheitsgrade senkrecht zur Spindelachse sowie zwei rotatorische Freiheitsgrade mit aufeinander senkrecht stehenden Drehachsen, die senkrecht zur Spindelachse verlaufen.

In der DE-C-28 10 341 ist eine Längenmesseinrichtung beschrieben, bei der die Abtasteinheit über ein in Messrichtung steifes Kupplungselement in Form eines Drahtes an den Mitnehmer nahe der neutralen Faser des Massstabs angekoppelt ist. Durch Auslenkungen des Drahtes infolge von Unparallelitäten zwischen der Führung des zu messenden Objekts und der Hilfsführung und den damit verbundenen Längenänderungen des Drahtes in Messrichtung treten Messfehler auf; des weiteren verläuft der Draht nicht in der neutralen Faser, so dass Richtungsfehler ebenfalls Messungenauigkeiten zur Folge haben.

Bei der Längenmesseinrichtung der DE-A-25 05 586 ist die Abtasteinheit ebenfalls über einen in Messrichtung steifen Draht an den Mitnehmer angekoppelt; zugleich bewirkt dieser Draht das Andrücken der Abtasteinheit an die Hilfsführung. Auch dieser Draht verändert bei Parallelbewegungen den Abstand zwischen der Abtasteinheit und dem Mitnehmer, während bei Winkelbewegungen der Drehpunkt ebenfalls nicht in der neutralen Faser liegt, so dass Messfehler durch Unparallelitäten und Richtungsfehler nicht zu vermeiden sind.

In der DE-C-26 11 459 ist eine Längenmessrichtung gezeigt, bei der die Abtasteinheit über eine Kupplung gelenkig an dem Mitnehmer angekoppelt ist; die Kupplung besteht aus einer planen Fläche an der Abtasteinheit, die mit einer sphärischen Fläche des Mitnehmers mittels einer Feder in ständigem Kontakt steht. Bei dieser Ankopplung liegt der Kuplungspunkt ausserhalb der neutralen Faser des Massstabs, wobei der Abstand des Kupplungspunktes von der neutralen Faser Schwankungen durch Parallelversatz zwischen der Hilfsführung und der Objektführung unterliegt, so dass Messfehler infolge von Richtungsfehlern auftreten können.

Die DE-B-22 19 624 betrifft eine Messanordnung, bei der die Abtasteinheit an den Mitnehmer über einen in Messrichtung steifen Draht gelenkig angekoppelt ist, der mit einem Gelenkviereck verbunden ist, dessen Momentalpol in der neutralen Faser liegt. Mit dieser Ankopplung werden zwar Messfehler infolge von Richtungsfehlern vermieden, nicht jedoch Messfehler durch Auslenkungen des Drahtes infolge von Unparallelitäten.

Bei der Längenmesseinrichtung der DE-C-25 10 219 erfolgt die gelenkige Ankopplung der Abtasteinheit an den Mitnehmer einmal in Höhe der neutralen Ebene des Massstabs durch Blattfedern und zum anderen durch weitere Blattfedern in einer zur neutralen Ebene senkrechten Ebene durch die neutrale Faser. Mit dieser Ankopplung werden gleichfalls Messfehler infolge von Richtungsfehlern ausgeschaltet, nicht jedoch Messfehler durch Auslenkungen der Blattfedern infolge von Unparallelitäten.

Der Erfindung liegt die Aufgabe zugrunde, bei einer Längenmesseinrichtung der oben erwähnten Gattung eine messfehlerfreie Ankopplung der Abtasteinheit am zu messenden Objekt oder an einem daran angebrachten Mitnehmer anzugeben.

Diese Aufgabe wird bei einer Einrichtung der eingangs genannten Art erfindungsgemäss durch die kennzeichnenden Merkmale des Anspruchs 1 gelöst.

Die mit der Erfindung erzielten Vorteile bestehen insbesondere darin, dass bei der vorgeschlagenen Ankopplung mit einfachen Mitteln bei einer an einer Hilfsführung verschiebbaren Abtasteinheit auch bei ausserhalb der neutralen Ebene des Massstabs liegender Teilungsebene die Messgenauigkeit weiter gesteigert werden kann, ohne dass an die Hilfsführung und an die Objektführung hinsichtlich der Führungsgenauigkeit hohe Anforderungen gestellt werden müssen.

Vorteilhafte Ausbildungen der Erfindung entnimmt man den abhängigen Ansprüchen.

Ausführungsbeispiele der Erfindung sind in der Zeichnung dargestellt und werden im folgenden näher erläutert.

Es zeigen

Figur 1 eine Längenmesseinrichtung mit einer ersten Ausführungsform der Ankopplung und

Figur 2 eine weitere Ausführungsform der Ankopplung nach der Erfindung in vereinfachter Darstellung.

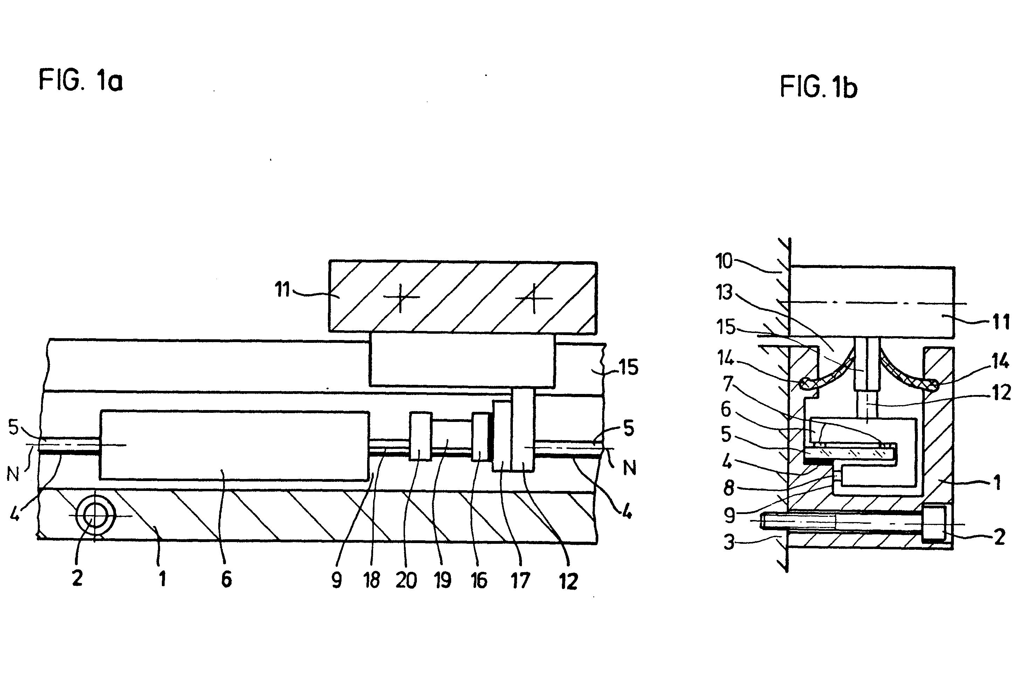

Gemäss Figur 1a, b ist das Gehäuse 1 einer Längenmesseinrichtung mittels einer Schraube 2 an einem Bett 3 einer nicht dargestellten Werkzeugmaschine befestigt. An einer Innenfläche des Hohlgehäuses 1 ist mittels einer Klebeschicht 4 ein Massstab 5 angebracht, dessen Teilung von einer Abtasteinheit 6 abgetastet wird, die in nicht gezeigter Weise eine Beleuchtungseinrichtung und Photoelemente aufweist. Die Abtasteinheit 6 stützt sich mittels Rollen 7 auf der Teilungsebene T des Massstabs 5 und mittels Rollen 8 an einer Führungsfläche 9 des Gehäuses 1 ab, die die Hilfsführung für die Abtasteinheit 6 bilden. An einem Schlitten 10 der Werkzeugmaschine ist in beliebiger Weise ein Montagefuss 11 mit einem Mitnehmer 12 befestigt, der mit der Abtasteinheit 6 über eine Kupplung verbunden ist. Die Öffnung 13 in dem ansonsten völlig geschlossenen Gehäuse 1 ist zur Vermeidung des Eindringens von Verunreinigungen durch Dichtlippen 14 verschlossen, die an einem schwertförmigen Zwischenstück 15 des Mitnehmers 12 anliegen.

Die Kupplung zwischen der Abtasteinheit 6 und dem Mitnehmer 12 besteht zum Ausgleich von Unparallelitäten zwischen der Hilfsführung der Abtasteinheit 6 und der Führung des Schlittens 10 aus einer Kreuzführung, die aus zwei magnetisch miteinander verbundenen ebenen Platten 16, 17 gebildet ist, die eine zweidimensionale translatorische Bewegung der Kupplung in einer zur Messrichtung etwa senkrechten Ebene erlauben; die Platte 17 ist mit dem Mitnehmer 12 verbunden. Zum Ausgleich von Richtungsfehlern zwischen der Führungsrichtung der Abtasteinheit 6 an der Hilfsführung und der Mittellinie der Teilung des Massstabs 5 in der Teilungsebene T und in einer zur Teilungsebene T senkrechten Ebene sind zwei ebene Drehgelenke in Form zweier Blattfedern 18, 19 vorgesehen, die über eine Platte 20 miteinander verbunden sind. Während die Blattfeder 18 mit der Abtasteinheit 6 verbunden ist und mit ihrer Ebene in Höhe der neutralen Ebene N des Massstabs 5 verläuft, ist die Blattfeder 19 mit der Platte 16 verbunden und liegt mit ihrer Ebene in Höhe der zur neutralen Ebene N senkrechten Ebene durch die Mittellinie der Teilung des Massstabs 5;

die letztere Ebene schneidet die neutrale Ebene N in der neutralen Faser des Massstabs 5. Die Blattfedern 18, 19 ermöglichen somit Drehbewegungen um zwei Drehachsen, die sich in der neutralen Faser schneiden.

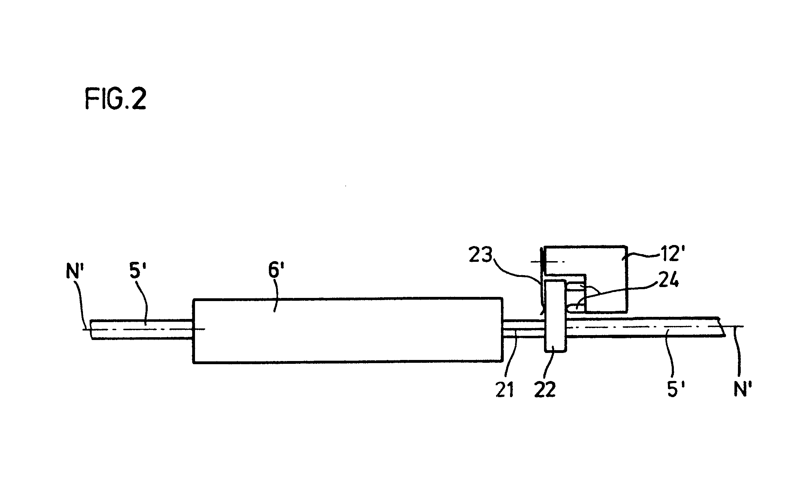

In Figur 2 ist eine weitere Ausführungsform einer derartigen Kupplung zwischen einer Abtasteinheit 6′ und einem Mitnehmer 12′ dargestellt. Eine Blattfeder 21 ist mit ihrer Ebene in Höhe der neutralen Ebene N′ eines Massstabs 5′ einmal mit der Abtasteinheit 6′ und zum anderen mit einer zur Messrichtung senkrechten ebenen Platte 22 aus Hartmetall verbunden, die mittels einer Feder 23 mit zwei sphärischen Flächen 24 des Mitnehmers 12′ in ständigem Kontakt gehalten wird; diese sphärischen Flächen 24 liegen in der zur neutralen Ebene N′ des Massstabs 5′ senkrechten Ebene durch die neutrale Faser. Die Platte 22 mit den kontaktierenden sphärischen Flächen 24 erlauben eine zweidimensionale translatorische Bewegung der Kupplung in einer zur Messrichtung etwa senkrechten Ebene zum Ausgleich von Unparallelitäten und eine Drehbewegung um eine Drehachse senkrecht zur Messrichtung und senkrecht zur neutralen Ebene N′ des Massstabs 5′ zum Ausgleich von Richtungsfehlern in Verbindung mit der Drehbewegung der Blattfeder 21 um eine Drehachse in der neutralen Ebene N′ senkrecht zur Messrichtung.

Das Drehgelenk mit zwei rotatorischen Freiheitsgraden kann auch durch ein räumliches Drehgelenk, vorzugsweise durch einen kurzen Draht, gebildet sein, dessen Länge derart bemessen ist, dass lediglich Winkelbewegungen möglich sind. Wenigstens eine der beiden Platten 16, 17 kann aus einem kunststoffgebundenen Magnetwerkstoff bestehen. Die beiden Platten 16, 17 können auch in nicht gezeigter Weise durch Federkraft in Kontakt gehalten werden.

Auch die ebene Platte 22 kann aus kunststoffgebundenem Magnetwerkstoff bestehen, so dass auch die Platte 22 und die sphärischen Flächen 24 aus Stahl durch Magnetkraft in ständigem Kontakt gehalten werden. Des weiteren können die Blattfedern 18, 19 mitsamt den Platten 16, 20 und der Abtasteinheit 6 bzw. die Blattfeder 21 mitsamt der Platte 22 und der Abtasteinheit 6′ in einem Stück aus demselben Material gebildet sein. Die Lagen der Blattfedern 18, 19 können auch gegeneinander vertauscht sein.

**Patentansprüche**

1. Längenmesseinrichtung zur Messung der Relativlage zweier Objekte (3, 10), bei der ein Massstab (5) mit dem einen Objekt (3) verbunden ist und die Teilung des Massstabs (5) von einer Abtasteinheit (6) abgetastet wird, die am anderen zu messenden Objekt (10) oder an einem daran angebrachten Mitnehmer (12) über eine in Messrichtung steife Kupplung gelenkig angekoppelt und an einer von der Führung des zu messenden Objekts (10) unabhängigen Hilfsführung verschliessbar ist, dadurch gekennzeichnet, dass die Kupplung zwischen der Abtasteinheit (6, 6′) und dem zu messenden Objekt (10) bzw. dem daran angebrachten Mitnehmer (12, 12') zum Ausgleich von Richtungsfehlern infolge von Richtungsänderungen zwischen der Hilfsführung und der Mittellinie der Teilung ein Drehgelenk mit zwei rotatorischen Freiheitsgraden, dessen beide zueinander senkrechte Drehachsen sich in der neutralen Faser des Massstabs (5) schneiden, etwa senkrecht zur Messrichtung besitzt, und zum Ausgleich von Unparallelitäten zwischen der Hilfsführung und der Führung des zu messenden Objekts (10) eine Linearführung mit zwei translatorischen Freiheitsgraden etwa senkrecht zur Messrichtung aufweist.

2. Längenmesseinrichtung nach Anspruch 1, dadurch gekennzeichnet, dass das Drehgelenk mit zwei rotatorischen Freiheitsgraden durch zwei ebene Drehgelenke (18, 19) gebildet ist, deren zueinander senkrechte Drehachsen sich in der neutralen Faser des Massstabs (5) schneiden.

3. Längenmesseinrichtung nach Anspruch 2, dadurch gekennzeichnet, dass die ebenen Drehgelenke (18, 19) durch je eine Blattfeder gebildet sind.

4. Längenmesseinrichtung nach Anspruch 1, dadurch gekennzeichnet, dass das Drehgelenk mit zwei rotatorischen Freiheitsgraden durch ein räumliches Drehgelenk gebildet ist.

5. Längenmesseinrichtung nach Anspruch 4, dadurch gekennzeichnet, dass das räumliche Drehgelenk aus einem Draht besteht, dessen Länge derart bemessen ist, dass lediglich Winkelbewegungen möglich sind.

6. Längenmesseinrichtung nach Anspruch 1, dadurch gekennzeichnet, dass die Linearführung mit zwei translatorischen Freiheitsgraden aus zwei durch Magnetkraft oder durch Federkraft miteinander in Kontakt stehenden ebenen Platten (16, 17) besteht.

7. Längenmesseinrichtung nach Anspruch 6, dadurch gekennzeichnet, dass wenigstens eine ebene Platte (16, 17) aus kunststoffgebundenem Magnetwerkstoff besteht.

8. Längenmesseinrichtung nach den Ansprüchen 1 und 2, dadurch gekennzeichnet, dass ein ebenes Drehgelenk einen Bestandteil der Linearführung bildet.

9. Längenmesseinrichtung nach den Ansprüchen 1 und 8, dadurch gekennzeichnet, dass eine Blattfeder (21) mit ihrer Ebene in Höhe der neutralen Ebene (N') des Massstabs (5') mit der Abtasteinheit (6') und mit einer zur Messrichtung senkrechten ebenen Platte (22) verbunden ist, die mit zwei sphärischen Flächen (24) des Mitnehmers (12') in ständigem Kontakt steht, die in einer Ebene in der neutralen Faser senkrecht zur neutralen Ebene (N') des Massstabs (5') liegen.

10. Längenmesseinrichtung nach Anspruch 9, dadurch gekennzeichnet, dass die Platte (22) aus Hartmetall und die sphärischen Flächen (24) aus Stahl bestehen.

11. Längenmesseinrichtung nach Anspruch 9, dadurch gekennzeichnet, dass die Platte (22) und die sphärischen Flächen (24) durch Magnetkraft oder Federkraft in ständigem Kontakt stehen.

12. Längenmesseinrichtung nach den Ansprüchen 1 und 3, dadurch gekennzeichnet, dass die Blattfedern (18, 19) mitsamt den Platten (16, 20) und der Abtasteinheit (6) in einem Stück aus demselben Material gebildet sind.

13. Längenmesseinrichtung nach den Ansprüchen 1 und 9, dadurch gekennzeichnet, dass die Blattfeder (21) mitsamt der Platte (22) und der Abtasteinheit (6') in einem Stück aus demselben Material gebildet sind.

## Claims

1. Displacement measuring device for measuring the relative position of two objects (3, 10), in which a scale (5) is connected to one object (3) and the graduation of the scale (5) is scanned by a scanning unit (6), which is coupled to the other object to be measured (10) or to a carrier (12) fitted thereto in articulated manner by way of a coupling stiff in the measuring direction and is displaceable on an auxiliary guide independently of the guiding of the object to be measured (10), characterized in that the coupling between the scanning unit (6, 6') and the object to be measured (10) or the carrier (12, 12') fitted thereto, comprises a rotational linkage with two rotational degrees of freedom whose two mutually perpendicular axes of rotation intersect in the neutral axis of the scale 5, approximately perpendicular to the measuring direction, for compensation of directional errors, consequent upon directional variations between the auxiliary guide and the centre line of the graduation, and a linear guide with two translation degrees of freedom approximately perpendicular to the measuring direction for the compensation of lack of parallelism between the auxiliary guide and the guide of the object to be measured (10).

2. Displacement measuring device according to claim 1, characterized in that the rotational linkage with two rotational degrees of freedom is formed by two rotational links (18, 19) whose mutually perpendicular axes of rotation intersect in the neutral axis of the scale (5).

3. Displacement measuring device according to claim 2, characterized in that the flat rotational links (18, 19) are each formed by a leaf spring.

4. Displacement measuring device according to claim 1, characterized in that the rotational link with two rotational degrees of freedom is formed by a three dimensional rotational link.

5. Displacement measuring device according to claim 4, characterized in that the three dimensional rotational link consists of a wire whose length is so selected that only angular movements are possible.

6. Displacement measuring device according to claim 1, characterized in that the linear guide with two translational degrees of freedom consists of two flat plates (16, 17) held in constant contact with one another by magnetic force or by spring force.

7. Displacement measuring device according to claim 6, characterized in that at least one flat plate (16, 17) consists of magnetic material bound with synthetic material.

8. Displacement measuring device according to claim 1 und 2, characterized in that one flat rotational link forms a component of the linear guide.

9. Displacement measuring device according to claim 1 and 8, characterized in that a leaf spring (21) with its plane at the level of the neutral plane (N') of the scale (5') is connected to the scanning unit (6') and to a flat plate (22) perpendicular to the measuring direction, the plate being in constant contact with two spherical surfaces (24) of the carrier (12'), which lie in a plane in the neutral axis perpendicular to the neutral plane (N') of the scale.

10. Displacement measuring device according to claim 9, characterized in that the plate consists of hard metal and the spherical surfaces (24) of steel.

11. Displacement measuring device according to claim 9, characterized in that the plate (22) and the spherical surfaces (24) are held in constant contact by magnetic force or spring force.

12. Displacement measuring device according to claims 1 and 3, characterized in that the springs (18, 19) together with the plates (16, 20) and the scanning unit (6) are formed in one piece of the same material.

13. Displacement measuring device according to claims 1 and 9, characterized in that the leaf spring (21) together with the plate (22) and the scanning unit (6') are formed in one piece of the same material.

**Revendications**

1. Dispositif de mesure de longueurs, destiné à mesurer la position relative de deux objets (3,10), une échelle (5) étant reliée à l'un des objets (3) et la graduation de l'échelle (5) étant balayée par une unité de balayage (6) qui est accouplée, de façon articulée, par un accouplement rigide dans le sens de la mesure, à l'autre objet (10) à mesurer ou à un entraîner (12) fixé à cet objet, et qui peut être déplacée sur un guidage auxiliaire, indépendant du guidage de l'objet à mesurer (10), caractérisé en ce que l'accouplement entre l'unité de balayage (6, 6') et l'objet à mesurer (10) ou l'entraîneur (12, 12') fixé à cet objet possède, pour la compensation d'erreurs de direction dues à des modifications de direction entre le guidage auxiliaire et la ligne médiane de la graduation, une articulation rotative, à peu près perpendiculaire au sens de la mesure, à deux degrés de liberté en rotation, dont les axes de rotation, qui sont perpendiculaires l'un par rapport à l'autre, se coupent dans la fibre neutre de l'échelle (5), et qu'il présente, pour la compensation de non-parallélismes entre le guidage auxiliaire et le guidage de l'objet à mesurer (10), un guidage linéaire, à peu près perpendiculaire au sens de la mesure, à deux degrés de liberté en translation.

2. Dispositif de mesure de longueur selon la revendication 1, caractérisé en ce que l'articulation rotative à deux degrés de liberté en rotation est formée par deux articulations rotatives planes (18, 19) dont les axes de rotation, qui sont perpendiculaires l'un par rapport à l'autre, se coupent dans la fibre neutre de l'échelle (5).

3. Dispositif de mesure de longueur selon la revendication 2, caractérisé en ce que les articulations rotatives planes (18; 19) sont formées chacune par une lame de ressort.

4. Dispositif de mesure de longueur selon la revendication 1, caractérisé en ce que l'articulation rotative à deux degrés de liberté en rotation est formée par une articulation rotative à mouvement spatial.

5. Dispositif de mesure de longueur selon la revendication 4, caractérisé en ce que l'articulation rotative à mouvement spatial est composée d'un fil dont la longueur est dimensionnée de sorte que seul des mouvements angulaires sont possibles.

6. Dispositif de mesure de longueur selon la revendication 1, caractérisé en ce que le guidage linéaire à deux degrés de liberté en translation est composé de deux plaques planes (16, 17) qui sont en contact en raison d'une force magnétique ou d'une force de ressort.

7. Dispositif de mesure de longueur selon la revendication 6, caractérisé en ce qu'au moins une plaque plane (16, 17) est composée d'un matériau magnétique lié par matière plastique.

8. Dispositif de mesure de longueur selon les revendications 1 et 2, caractérisé en ce qu'une articulation rotative plane forme une partie intégrante du guidage linéaire.

9. Dispositif de mesure de longueur selon les revendications 1 et 8, caractérisé en ce qu'une lame de ressort (21) est reliée dans son plan, à hauteur du plan neutre (N') de l'échelle (5'), avec l'unité de balayage (6') et avec une plaque (22), qui est perpendiculaire au sens de la mesure et est en contact permanent avec deux surfaces sphériques (24) de l'entraîneur (12'), ces surfaces se trouvant sur un plan dans la fibre neutre perpendiculairement au plan neutra (N') de l'échelle (5').

10. Dispositif de mesure de longueur selon la revendication 9, caractérisé en ce que la plaque (22) est composée de métal dur et que les surfaces sphériques (24) sont composées d'acier.

11. Dispositif de mesure de longueur selon la revendication 9, caractérisé en ce que la plaque (22) et les surfaces sphériques (24) sont en contact permanent en raison d'une force magnétique ou d'une force de ressort.

12. Dispositif de mesure de longueur selon les revendications 1 et 3, caractérisé en ce que les lames de ressort (18, 19) sont formées d'une seule pièce à partir d'un même matériau avec les plaques (16, 20) et l'unité de balayage (6).

13. Dispositif de mesure de longueur selon les revendications 1 et 9, caractérisé en ce que la lame de ressort (21) est formée d'une seule pièce à partir d'un même matériau avec la plaque (22) et l'unité de balayage (6').

FIG. 1a

FIG. 1b

0 084 624

FIG.2

0 084 624